# EUROPÄISCHE PATENTSCHRIFT

(11) **EP 1 710 959 B1**
(45) Veröffentlichungstag und Bekanntmachung des Hinweises auf die Patenterteilung: **17.12.2008**
(21) Anmeldenummer: 06006460.7
(22) Anmeldetag: 29.03.2006
(51) Int. Cl.: H04L 12/28

(54) **Verfahren zum Betreiben eines Bussystems für ein Gebäudeleitsystem**
Method of operating a bus system for a building management system
Procédé de fonctionnement d'un système de bus pour un système de contrôle de bâtiment

(30) Priorität: 07.04.2005 DE 102005015864
(43) Veröffentlichungstag der Anmeldung: 11.10.2006
(73) Patentinhaber: Reich, Thomas, 42327 Wuppertal (DE); Schömann, Dietmar, 42657 Solingen (DE)
(72) Erfinder: Reich, Thomas, 42327 Wuppertal (DE); Schömann, Dietmar, 42657 Solingen (DE)
(74) Vertreter: Grosse, Wolf-Dietrich Rüdiger

(56) Entgegenhaltungen:
- DE-A1- 10 109 488
- US-A- 5 420 572
- US-A1- 2004 075 535
- US-B1- 6 721 818
- STRAYER W T ET AL: "Is XTP Suitable for Distributed Real-Time Systems?" XTP, 16. März 1992 (1992-03-16), Seiten 93-101, XP010259556
- TOBE Y ET AL: "A lightweight transport protocol for home networks" NETWORKED APPLIANCES, 2002. PROCEEDINGS. 2002 IEEE 4TH INTERNATIONAL WORKSHOP ON JAN. 15-16, 2001, PISCATAWAY, NJ, USA,IEEE, 15. Januar 2001 (2001-01-15), Seiten 179-185, XP010575050 ISBN: 0-7803-7259-X

## Beschreibung

Die Erfindung betrifft ein Verfahren zum Betreiben eines Bussystems für ein Gebäudeleitsystem mit den im Oberbegriff von Anspruch 1 angegebenen Merkmalen, wie durch die Veröffentlichung STRAYER W.T. at al "Is XTP Suitable for Distributed Real-Time Systems?", XTP, 16. März 1992 (1992-03-16), Seiten 93 bis 101, bekannt geworden.

Aus der Druckschrift TOBE Y et al "A lightweight transport protocol for home networks" NETWORKED Appliances, 2002, wird der Einsatz von XTP in einem Gebäudenetzwerk bzw. einem Gebäudebussystem thematisiert.

Aus der DE 198 18 233 A1 ist ein Bussystem bekannt, das nach den Vorgaben der European Installation Bus Association (EIBA) ausgelegt ist. Das Bussystem weist eine Anzahl Aktuatoren, Anzeige-, Mess- oder Steuereinrichtung bzw. Sensoren auf, die an eine gemeinsame, separat zum Energieverteilungsnetz verlegte Busleitung angeschlossen sind, über die die Informationsübertragung zu den einzelnen Systemteilnehmern erfolgt.

Die DE 101 28 734 A1 offenbart ein Haus-Kommunikations- und Automatisierungssystem mit einem aus Datennetzwerkknoten bestehenden Datennetzwerk, das Audio- und Videodaten zwischen Kommunikations-Endgeräten über Lichtwellenleiter von einem Datenbus mit einer hohen Datenübertragungsrate überträgt. Ferner ist ein Hausstromnetz mit Stromversorgungsleitungen zur Stromversorgung des Datennetzwerkes und der Kommunikations-Endgeräte vorgesehen. Um den Verkabelungsaufwand möglichst gering zu halten, ist der Datenbus entsprechend der Netzwerktopologie des Hausstromnetzes zusammen mit den Stromversorgungsleitungen verlegt, wobei über die Lichtwellenleiter des Datenbusses zusätzlich Daten zur Steuerung von Hausautomations-Aktuatoren und Sensordaten von Hausautomations-Sensoren mit niedriger Datenübertragungsrate übertragen werden.

Aus der DE 102 51 804 A1 ist ein elektrisches Hausinstallationssystem mit einem seriellen Installationsbus zum hausinternen dezentralen Schalten, Steuern, Übertragen und Überwachen von Energie und Information bekannt, bei dem zwecks Erzielung einer einfachen Bedienbarkeit und einer einfachen Installation bzw. Konfiguration das System aus einer Vielzahl modular aufgebauter Einzelmodule besteht, die jeweils ein Logikmodul mit einem anwendungsspezifischen Schaltkreis und einen Speicherträger in Form einer Chipkarte mit einem elektronischen Speicher aufweist, wobei im Speicher der Parametersatz für das individuelle Einzelmodul gespeichert ist, so dass bei eingesteckter Chipkarte das Einzelmodul vollständig konfiguriert ist.

Die DE 298 09 106 U1 zeigt eine Installationseinrichtung für eine dezentrale Gebäudetechnik, mit einer Signalaufnahme- und Informationseinheit und einer Signalempfangs- und Steuerungseinheit, zwischen denen ein Signalaustausch stattfindet. Um einen einfachen Austausch vorhandener Schaltereinrichtung unter gleichzeitiger Erhöhung der Flexibilität und gemeinsamer dezentraler Steuerung der unabhängigen Installationseinrichtungen zu ermöglichen, ist die Signalaufnahme- und Informationseinheit unter Beibehaltung der herkömmlichen Abmessungen von Unterputz-Schalterabdeckungen zur Aufputzmontage vorgesehen.

Schließlich ist noch ein Busankoppler zum Anschluss von Anwendungsmodulen der Gebäudesystemtechnik an einen Feldbus über mehrpaarige Adern von elektrischen und optischen Leitungen aus der DE 297 01 136 U1 bekannt.

Es hat sich herausgestellt, dass es insbesondere bei dezentral arbeitenden Bussystemen für ein Gebäudeleitsystem wünschenswert ist, die Zuverlässigkeit und Sicherheit der Ansteuerung der zu betätigenden Elemente weiter zu erhöhen.

Der Erfindung liegt daher die Aufgabe zugrunde, ein Verfahren zum Betreiben eines Bussystems für ein Gebäudeleitsystem so weiterzubilden, dass ein Höchstmaß an Sicherheit im Datenverkehr erreicht wird, d. h. sowohl die Zuverlässigkeit des Systems als auch dessen Sicherheit soll maximal sein.

Diese Aufgabe wird für ein Verfahren der eingangs genannten Art dadurch gelöst, daß zweite Mittel zur Abgabe von Informationen gemessene Daten permanent in das Bussystem einspeisen und der Signalempfänger bei der Ausführung des Befehls gemäß Schritt f) des Oberbegriffsmerkmals von Anspruch 1 auf Informationen zurückgreift, die von dem zweiten Mittel zur Abgabe von Informationen in das Bussystem eingespeist werden.

Das erfindungsgemäße Vorgehen stellt ein Höchstmaß an Sicherheit bei der Betätigung der maßgeblichen Stellelemente bzw. Verbraucher sicher, da zu jeder Zeit und permanent ergänzende Informationen zur Verfügung stehen, die die Signalempfänger gegebenenfalls bei der Veranlassung eines Betätigungssignals benötigen. Ein versehentliches Betätigen eines Elements bzw. eines Verbrauchers ist praktisch ausgeschlossen, da über die Übermittlung der Kennung, der Empfangsbestätigung und des Bestätigungssignals absolut sichergestellt ist, dass nur der richtige Signalempfänger als Folge der vom Abgabemittel abgegebenen Information ein Signal veranlasst, mit dem ein Betätigungselement gestellt bzw. ein Verbraucher aktiviert wird. Jedem Signalempfänger des Bussystems ist eine individuelle Kennung zugeordnet, die jeweils nur einmal vergeben ist.

Die über das Bussystem übertragenen Informationssignale sind vorzugsweise digital, wie es im Stand der Technik als solches bekannt ist.

Eine Weiterbildung sieht vor, dass die zweiten Mittel zur Abgabe von Informationnen mit Messgeräten und/oder Sensoren in Verbindung stehen. Die zweiten Mittel zur Abgabe von Informationen speisen die gemessenen Daten permanent in das Bussystem ein. Die Messgeräte bzw. Sensoren sind insbesondere zur Bestimmung bzw. Messung der Zeit, der Außentemperatur, der Temperatur im Inneren des Gebäudes, der Windgeschwindigkeit, der Intensität der Sonnenstrahlung und/oder des Vorhandenseins von Niederschlag und dergleichen geeignet.

Insoweit sind drei Ebenen im Gebäudeleitsystem vorgesehen: Das Bussystem selber bildet eine Informationsebene, die Betätigungselemente sind Bestandteil einer Tätigkeitsebene und die Verbraucher stellen eine Leistungsebene dar, die mit einer Leistungsversorgung gekoppelt ist.

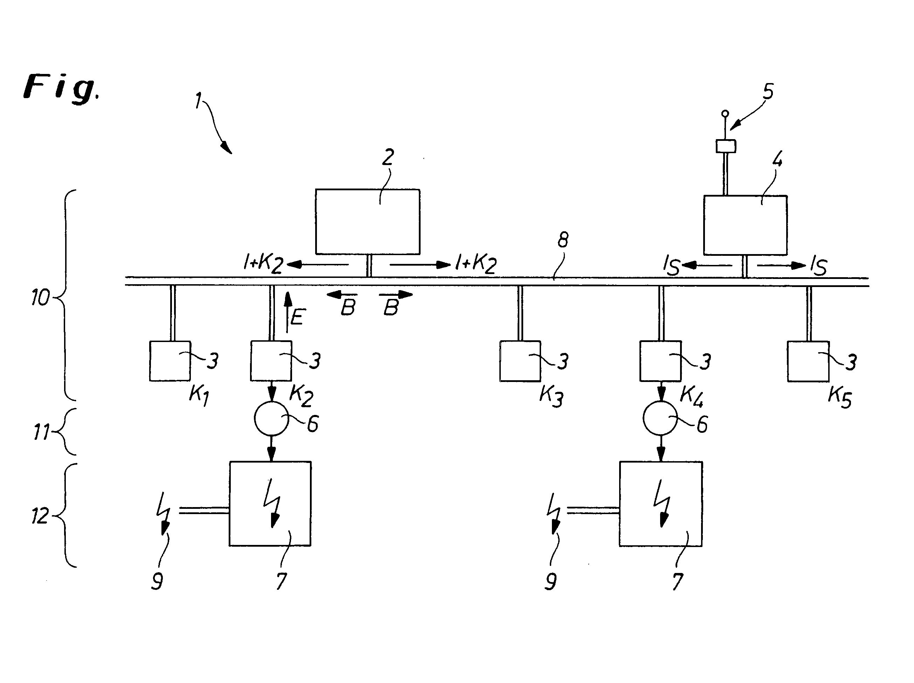

In der Zeichnung ist ein Ausführungsbeispiel der Erfindung dargestellt. Die einzige Figur zeigt schematisch ein Bussystem für ein Gebäudeleitsystem.

In der Figur ist ein Bussystem 1 für ein Gebäudeleitsystem angedeutet. Das Bussystem weist eine Informationsleitung 8 bekannter Art auf, bei der es sich beispielsweise um ein Lichtleitkabel handeln kann. Das Bussystem 1 weist erste Mittel 2 auf, die zur Abgabe von Informationen I geeignet sind. Bei den Informationen I handelt es sich allgemein um Steuerinformationen, mit denen Elemente der Gebäudeleittechnik gesteuert werden, beispielsweise Raumbeleuchtungen, Lüfter, elektrisch betätigte Jalousien, Heizelemente etc. Ferner weist das Bussystem 1 eine Anzahl Signalempfänger 3 auf, die jeweils ein spezielles Element der Gebäudeleittechnik steuern.

Jeder Signalempfänger 3 steht dabei mit einem Betätigungselement 6 in Verbindung, beispielsweise einem Aktuator, der einen Verbraucher 7 betätigt. Der Verbraucher 7 ist an ein elektrisches Leistungsnetz 9 angekoppelt. Insofern ergibt sich eine durch das Bussystem 1 gebildete Informationsebene 10, die mit einer Betätigungsebene 11 mit den Betätigungselemente 6 in Verbindung steht. Die Betätigungselemente 6 sind wiederum mit den Verbrauchern 7 verbunden, die sich auf einer Leistungsebene 12 befinden.

Das Bussystem 1 ist weiterhin mit einem zweiten Mittel 4 zur Abgabe von Informationen verbunden bzw. es weist diese Mittel auf. Das Mittel 4 steht mit diversen Messgeräten bzw. Sensoren 5 in Verbindung, mit denen Parameter ermittelt werden, die für die Steuerung der Technik des Hauses von Interesse bzw. Bedeutung sind. Zu nennen sind hier beispielsweise die Außentemperatur und die Gebäudeinnentemperatur bzw. die Innentemperatur in den Zimmern des Gebäudes; diese Daten sind für die richtige Steuerung bzw. Regelung der Heizung beachtlich, die ebenfalls von der Gebäudeleittechnik betätigt wird. Weiterhin können Windgeschwindigkeiten, die Intensität der Sonnenstrahlung und das Vorhandensein von Niederschlag (Regen, Hagel, etc.) von Bedeutung sein, wenn beispielsweise Außenjalousien zu betätigen sind. Eingespeist wird auch die Zeit, von der die Steuerungsvorgänge mitunter abhängen.

Die von den Mitteln 4 eingespeisten Informationen - in der Figur als Informationen I_{S} als von Sensoren ermittelte Daten bezeichnet - werden ständig in das Bussystem 1 eingegeben, d. h. die Daten stehen permanent im Bussystem 1 zur Verfügung und werden von den Signalempfängern 3 bei Bedarf abgerufen und für die Ausführung des Befehls von den Mitteln 2 benutzt.

Bei der Betätigung der Betätigungselemente 6 bzw. der Verbraucher 7 durch die Signalempfänger 2 wird zwecks Erzielung einer höchstmöglichen Sicherheit und Zuverlässigkeit der Ansteuerung wie folgt vorgegangen:

Zunächst senden die ersten Mittel 2 ein Informationssignal I über das Bussystem 1 aus, wobei das Informationssignal I um eine Kennung K ergänzt ist; in der Figur als K₂ bezeichnet, als eine Kennung, die für den Signalempfänger 3 bestimmt ist, der mit K₂ bezeichnet ist. Das Informationssignal I samt Kennung K₂ wird von allen Signalempfängern 3 empfangen. Allerdings erkennt nur der Signalempfänger, dem die Kennung K₂ zugeordnet ist, dass das Informationssignal für ihn bestimmt ist. infolge dessen sendet der Signalempfänger 3 eine Empfangsbestätigung E an die ersten Mittel 2 zurück, um zu signalisieren, dass er die Information I empfangen hat.

Die ersten Mittel 2 veranlassen hierauf das Absenden eines Bestätigungssignals B, das auch vom Signalempfänger 3 empfangen wird, dem die Kennung K₂ zugeordnet ist. Erst hierauf führt der Signalempfänger 3 den maßgeblichen Befehl aus, d. h. er steuert das Betätigungselement 6 an, das wiederum auf den Verbraucher 7 so einwirkt, dass er in der gewünschten Weise betätigt wird.

Jeder Signalempfänger liest die über das Bussystem transferierten Signale, allerdings reagiert nur derjenige Signalempfänger, für den aufgrund der Kennung K die Information bestimmt ist.

Aufgrund des ständigen Datentransfers wird ein Höchstmaß an Sicherheit im Datenverkehr erreicht.

Das Bussystem 1 ist dabei dezentral ausgebildet, d. h. die benötigten Komponenten des Systems können an beliebigen Stellen des Bussystems angeordnet werden. Der Datenaustausch im Bussystem (Informationssignale, Empfangsbestätigungen, Bestätigungssignale) können auch als "Telegramme" bezeichnet werden.

Die benötigten Komponenten können in Aluminiumgehäusen untergebracht werden, die mit entsprechenden Deckeln abgeschlossen sind. Die Festlegung des Gehäuses kann mit Schellen erfolgen, die auch für eine Zugentlastung der Leitungen sorgen.

### Bezugszeichenliste:

- 1: Bussystem
- 2: erstes Mittel zur Abgabe von Informationen
- 3: Signalempfänger
- 4: zweites Mittel zur Abgabe von Informationen
- 5: Messgerät / Sensor
- 6: Betätigungselement
- 7: Verbraucher
- 8: Informationsleitung
- 9: elektrisches Leistungsnetz
- 10: Informationsebene
- 11: Betätigungsebene
- 12: Leistungsebene
- I: Informationssignal
- I_{S}: vom Messgerät / Sensor ermittelte Information
- K₁, K₂, ...: Kennung
- E: Empfangsbestätigung
- B: Bestätigungssignal

## Patentansprüche

1. Verfahren zum Betreiben eines Bussystems (1) für ein Gebäudeleitsystem, bei dem mindestens ein erstes Mittel (2) zur Abgabe von Informationen mit einer Anzahl Signalempfängern (3) über das Bussystem in Kommunikationsverbindung steht, das die folgenden Schritte aufweist:
a) Aussenden eines Informationssignals (I) von dem ersten Mittel (2) zur Abgabe einer Information über das Bussystem, wobei dem Informationssignal (I) die Kennung (K) eines Signalempfängers (3) zugeordnet ist;
b) Empfangen des Informationssignals (I) von dem Signalempfänger (3), dem die Kennung (K) zugeordnet ist;
c) Senden einer Empfangsbestätigung (E) vom Signalempfänger (3) an die ersten Mittel (2) zur Abgabe einer Information;
d) Empfangen der Empfangsbestätigung (E) von dem ersten Mittel (2) zur Abgabe einer Information;
e) Absenden eines Bestätigungssignals (B) von dem ersten Mittel (2) zur Abgabe einer Information;
f) Empfangen des Bestätigungssignals (B) von dem Signalempfänger (3) und Ausführung des dem Informationssignal (I) zugrunde liegenden Befehls von dem Signalempfänger (3),
**dadurch gekennzeichnet,**
**daß** zweite Mittel (4) zur Abgabe von Informationen gemessene Daten (Iₛ) permanent in das Bussystem einspeisen und der Signalempfänger (3) bei der Ausführung des Befehls gemäß Schritt f) auf Informationen (Iₛ) zurückgreift, die von dem zweiten Mittel (4) zur Abgabe von Informationen in das Bussystem eingespeist werden.

2. Verfahren nach Anspruch 1,
**dadurch gekennzeichnet,**
**dass** die über das Bussystem übertragenen Informationssignale digital sind.

3. Verfahren nach Anspruch 1 oder 2,
**dadurch gekennzeichnet,**
**dass** die zweiten Mittel (4) zur Abgabe von Informationen mit Messgeräten und/oder Sensoren (5) in Verbindung stehen.

## Claims

1. A method for the operation of a bus system (1) for a building management system, in which a first means (2) for the transfer of information is in communication with a number of signal receivers (3) via the bus system, which method has the following steps:
a) transmission of an information signal (I) from the first means (2) for purposes of transferring information via the bus system, wherein the identifier (K) of a signal receiver (3) is assigned to the information signal (I);
b) receipt of the information signal (I) by the signal receiver (3) to which the identifier (K) is assigned;
c) transmission of a confirmation of receipt (E) from the signal receiver (3) to the first means (2) for the transfer of information;
d) receipt of the confirmation of receipt (E) by the first means (2) for the transfer of information;
e) sending of a confirmation signal (B) from the first means (2) for the transfer of information;
f) receipt of the confirmation signal (B) by the signal receiver (3), and execution by the signal receiver (3) of the command underlying the information signal (I),
**characterised in**
**that** second means (4) for the transfer of information permanently store measured data (I_{D}) into the bus system, and in that the signal receiver (3) in the execution of the command in accordance with step f) refers back to information (I_{D}) that has been stored in the bus system by the second means (4) for the transfer of information.

2. The method according to Claim 1,
**characterised in**
**that** the information signals transferred via the bus system are digital.

3. The method according to Claim 1 or 2,
**characterised in**
**that** the second means (4) for the transfer of information are connected to measuring equipment and/or sensors (5).

## Revendications

1. Procédé d'exploitation d'un système de bus (1) destiné à un système de contrôle de bâtiment, dans lequel au moins un premier moyen (2) pour délivrer des informations est en liaison de communication avec une pluralité de récepteurs de signaux (3) par l'intermédiaire du système de bus, lequel procédé présente les étapes suivantes :
a) émission d'un signal d'information (I) par le premier moyen (2) délivrant une information par l'intermédiaire du système de bus, moyennant quoi le signal d'information (I) est coordonné à l'identification caractéristique (K) d'un récepteur de signaux (3) ;
b) réception du signal d'information (I) par le récepteur de signaux (3), auquel l'identification (K) est associée ;
c) envoi d'une confirmation de réception (E) par le récepteur de signaux (3) au premier moyen (2) délivrant une information ;
d) réception de la confirmation de réception (E) par le premier moyen (2) délivrant une information ;
e) expédition d'un signal de confirmation (B) par le premier moyen (2) délivrant une information ;
f) réception du signal de confirmation (B) par le récepteur de signaux (3) et exécution par le récepteur de signaux (3) de l'instruction sous-jacente au signal d'information (I),
**caractérisé en ce que**
des deuxièmes moyens (4) pour délivrer des informations mémorisent les données mesurées (Iₛ) de manière permanente dans le système de bus et le récepteur de signaux (3) revient lors de l'exécution de l'instruction conformément à l'étape f) sur les informations (Iₛ), qui sont mémorisées dans le système de bus par les deuxièmes moyens (4) délivrant des informations.

2. Procédé selon la revendication 1,
**caractérisé en ce que**
les signaux d'information transmis par l'intermédiaire du système de bus sont numériques.

3. Procédé selon la revendication 1 ou 2,
**caractérisé en ce que**
les deuxièmes moyens (4) délivrant des informations sont en liaison avec des appareils de mesure et/ou des capteurs (5).
